# EUROPÄISCHE PATENTSCHRIFT

(11) **EP 1 399 390 B1**
(45) Veröffentlichungstag und Bekanntmachung des Hinweises auf die Patenterteilung: **27.02.2013**
(21) Anmeldenummer: 02745404.0
(22) Anmeldetag: 24.06.2002
(51) Int. Cl.: C03B 11/00

(54) **VERFAHREN ZUM HERSTELLEN VON REFLEKTOREN ODER LINSEN**
METHOD FOR PRODUCING REFLECTORS OR LENSES
PROCEDE POUR PRODUIRE DES REFLECTEURS OU DES LENTILLES

(30) Priorität: 23.06.2001 DE 10130394
(43) Veröffentlichungstag der Anmeldung: 24.03.2004
(73) Patentinhaber: Auer Lighting GmbH, 37581 Bad Gandersheim (DE)
(72) Erfinder: ZIRFAS, Ulrich, 37581 Bad Gandersheim (DE)
(74) Vertreter: Dr. Weitzel & Partner
(86) Internationale Anmeldenummer: PCT/EP2002/006949
(87) Internationale Veröffentlichungsnummer: WO 2003/000604

(56) Entgegenhaltungen:
- DE-A- 10 018 270
- DE-B- 1 084 453
- US-A1- 2001 039 811
- DATABASE WPI Section Ch, Week 199202 Derwent Publications Ltd., London, GB; Class L01, AN 1992-014181 XP002902691 & JP 03 265528 A (OLYMPUS OPTICAL CO LTD), 26. November 1991 (1991-11-26)
- DATABASE WPI Section Ch, Week 198810 Derwent Publications Ltd., London, GB; Class L01, AN 1988-068939 XP002902692 & JP 63 025233 A (CANON KK), 2. Februar 1988 (1988-02-02)

## Beschreibung

Die Erfindung betrifft das Gebiet des Herstellens von Glas-Formlingen, und zwar mittels Pressen. Bei den genannten Formlingen handelt es sich um Reflektor oder Linsen.

Reflektoren der genannten Art sind aus DE-A-199 10 192 bekannt geworden. DE-A-100 62 187 befaßt sich mit Glaskörpern, die Zwischenerzeugnisse auf dem Wege zum Herstellen von Linsen sein können.

JP-A-03-265528 offenbart ein Pressverfahren zur Herstellung von optischen Elementen, bei den in zwei aufeinanderfolgenden Pressschritten ein Glasposten in seine endgültige Form gebracht wird. Oberer und unterer Pressstempel werden dabei gewechselt.

DE-A-1 084 453 beschreibt eine Vorrichtung zum Herstellen von kleinen Glasplättchen für Fußboden- und Wandbeläge. Auch hierbei werden mehrere Pressformen verwendet, durch welche aufeinanderfolgend Werkstücke hindurchtransportiert und bearbeitet werden.

Bei optischen Gegenständen dieser Art sind die Anforderungen an die Konturgenauigkeit und an die Oberflächengüte außerordentlich hoch. Sie liegen im µ-Bereich. Abweichungen von der Soll-Kontur können gravierende optische Nachteile haben und den Gegenstand unbrauchbar machen.

Zum Herstellen von Gegenständen der genannten Art werden Pressen angewandt. Dabei wird ein Glasposten aus einem Speiser in eine Presseinrichtung überführt, umfassend eine Pressform und einen Pressstempel, häufig auch einen sogenannten Deckring. In der Presseinrichtung wird der Umformungsprozess vollzogen, bei welchem der Pressartikel seine endgültige Gestalt erhält.

Bei den bisher bekannten Verfahren beziehungsweise Vorrichtungen werden die erwünschte Konturgenauigkeit und Oberflächengüte nicht erreicht. Dies geht darauf zurück, dass die Temperatur des Glaspostens im Verlauf des Pressvorganges abnimmt, was zu Kontraktionen führt. Damit sind unerwünschte Verformungen verbunden, die dazu führen, dass der Pressling nach dem Auswerfen aus der Presse nicht die gewünschte Geometrie aufweist. Zwar wird dem Pressling Wärme durch den Pressstempel entzogen, so dass die Temperatur beim beginnenden Pressen etwas abgesenkt und somit die Kontraktion etwas verringert wird. Der Wärmeentzug durch den Pressstempel reicht jedoch nicht aus.

Man hat auch schon versucht, den genannten nachteiligen Effekt durch Absenken der Ausgangtemperatur des Glases beim Austritt aus dem Speiser und beim Eintritt in die Preßeinrichtung zu verringern. Dies bedeutet jedoch, daß die notwendigen spezifischen Preßkräfte erhöht werden müssen. Dies führt wiederum zu einer hohen Beanspruchung des Preßwerkzeuges und damit zu Rissen sowie zu erhöhtem Verschleiß.

Auch hat man schon versucht, das Problem dadurch zu kompensieren, daß man das Formnest gegenüber der Soll-Geometrie des herzustellenden Preßlings überdimensioniert. Dies hat jedoch auch nicht zum Erfolg geführt, weil nämlich der Preßling auf seiner gesamten Umfangsfläche unterschiedlich stark abkühlt. So kühlt die der Preßform zugewandte Seite schneller ab, als die dem Preßstempel zugewandte Seite. Stempelseitig ist die Glasmasse besonders heiß und besonders weich, weil nämlich dort der Kontakt mit dem Stempel nur eine relativ geringe Zeitspanne herrscht. Jedenfalls sind auch mit den bekannten Verfahren und Vorrichtungen hochpräzise Preßlinge nicht in reproduzierbarer Weise herstellbar.

Der Erfindung liegt somit die Aufgabe zugrunde, ein Verfahren anzugeben, womit sich optische Gegenstände aus Glas mit hoher Konturgenauigkeit und hoher Oberflächengüte reproduzierbar und auf wirtschaftliche Weise erzeugen lassen.

Diese Aufgabe wird durch die selbständigen Ansprüche gelöst.

Der Erfinder ist dabei einen Weg gegangen, der es ihm erlaubt, die kostengünstige und für eine Massenproduktion geeignete Pressentechnik beizubehalten, dabei aber deren Nachteile zu vermeiden. Der wesentliche Gedanke besteht in der Anwendung eines Mehrphasen-Pressens, wobei die Endgeometrie des Formlings iterativ erreicht wird. Demgemäß wird zunächst ein Vorformling erzeugt, ausgehend von einem Glasposten, der mittels eines Speisers einer Preßeinrichtung zugeführt wird. Die Preßeinrichtung ist eine Vor-Preßeinrichtung mit einem Vor-Preßstempel. Die Vor-Preßeinrichtung erzeugt einen Preßling, dessen Geometrie zwar noch nicht gleich der Soll-Geometrie ist, jedoch relativ nahe an diese herankommt.

Diesem ersten Preßschritt sind wenigstens ein zwischen - Presvorgang und ein End-Presvorgang nachgeschaltet, bei welchem der Vorformling zum Endprodukt umgeformt wird.

Damit läßt sich die gestellte Aufgabe in perfekter Weise lösen. Die Erfindung hat aber noch die weiteren Vorteile:
Beim ersten Preßvorgang, durchzuführen in der Vorpresse, kann die Glastemperatur höher liegen und damit die Einflüsse der normalerweise niedrigeren Glastemperaturen minimieren.

In der nachfolgenden Fertigpreßeinrichtung ist der Umformungsgrad des Vorformlings außerordentlich gering. Deswegen kann dieser Endformprozeß bei relativ geringer Temperatur des Vorformlings durchgeführt werden. Etwa auftretende Abweichungen von der Soll-Kontur sind beim Endformling nur noch minimal.

Der gesamte Preßvorgang wird in drei oder mehrere Einzel-Preßvorgänge unterteilt so daß mehr als eine Vor-Preßeinrichtung vorgesehen sind.

Die Erfindung ist anhand der Zeichnung näher erläutert. Darin ist eine Vorrichtung zum Herstellen eines Formlings aus Glas veranschaulicht.

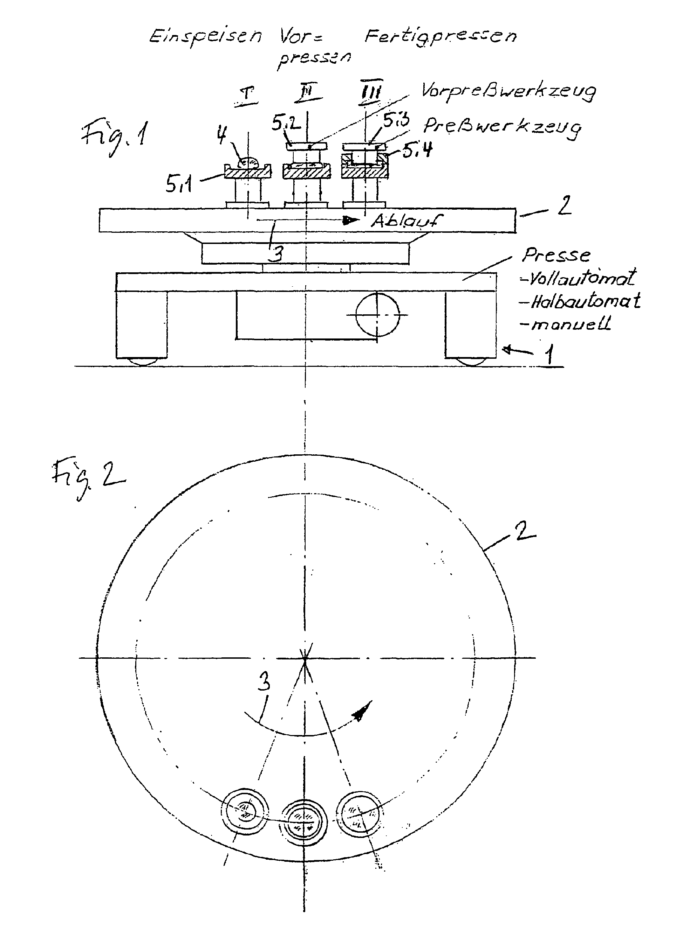

- Figur 1: zeigt eine solche Vorrichtung in einer Aufrißansicht.
- Figur 2: zeigt die Vorrichtung in Draufsicht.

Im einzelnen erkennt man aus den beiden Figuren folgendes:
Die Vorrichtung umfaßt eine Presse 1, die vollautomatisch, halbautomatisch oder manuell arbeiten kann.

Die Presse trägt zum Beispiel einen Drehteller 2. Dieser läuft schrittweise, das heißt jeweils um einen gewissen Winkel, entsprechend dem Pfeil 3 um.

Der Teller trägt über seinen Umfang verteilt angeordnete Pressformen. Diese umfassen jeweils eine Unterform 5.1. Dabei sind drei Stationen dargestellt, nämlich I, II, III.

In Station I sieht man einen Glasposten 4, der sich In der Unterform 5.1 befindet.

In Station II erkennt man ein Vorpreßwerkzeug 5.2, das den Glasposten 4 preßt und ihm dabei eine erste Gestalt verleiht.

In Station III erkennt man das eigentliche Presswerkzeug 5.3 (Endpresswerkzeug), ferner eine Oberform 5.4. Hier wird dem Pressling die endgültige Gestalt gegeben.

## Patentansprüche

1. Verfahren zum Herstellen von Reflektoren oder Linsen aus Glas mit den folgenden Verfahrensschritten:
es wird ein Glasposten in eine Vor-Pressstation beziehungsweise Pressstation überführt, umfassend eine Unterform (5.1) und einen Vor-Pressstempel;
der Glasposten wird in der Vor-Pressstation zu einem Vorformling umgeformt, der wenigstens annähernd die fertige Soll-Geometrie des optischen Gegenstandes annimmt;
der Vorformling wird mittels einer End-Pressstation, umfassend eine Unterform und einen End-Pressstempel, einem End-Pressvorgang unterworfen;
zwischen dem Vor-Pressvorgang und dem End-Pressvorgang wird wenigstens ein Zwischen-Pressvorgang vorgenommen;
die Glastemperatur wird von Pressvorgang zu Pressvorgang verringert;
die Unterform (5.1) wird auf einem Drehteller (2) angeordnet;
durch schrittweises Verdrehen des Drehtellers (2) in dieselbe Drehrichtung wird die Unterform (5.1) mit dem darin befindlichen Glasposten den aufeinander folgenden Pressstationen zugeführt.

## Claims

1. A method for manufacturing reflectors or lenses made of glass with the following steps:
a glass melt is passed into a pre-press station or a press station, comprising a lower mould (5.1) and a pre-press punch;
the glass melt is transformed into a parison in the pre-press station, which adopts at least approximately the finished reference geometry of the optical object;
the parison is subjected by means of an end-press station, including a lower mould and an end-press punch, to an end-press cycle;
at least one intermediate press cycle is initiated between the pre-press cycle and the end-press cycle;
the glass temperature is decreased from one press cycle to another press cycle;
the lower mould (5.1) is arranged on a turntable (2);
the lower mould (5.1) containing the glass melt is conveyed to the successive press stations by stepwise rotation of the turntable (2) in the same rotation direction.

## Revendications

1. Procédé de fabrication de réflecteurs ou de lentilles de verre présentant les phases suivantes:
on passe du verre en fusion dans un poste de pré-pressage ou un poste de pressage, comprenant un moule inférieur (5.1) un poinçon de pré-pressage;
le verre en fusion est transformé en paraison dans le poste de pré-pressage, qui adopté la géométrie de référence finie de l'objet optique au moins approximativement;
on soumet la paraison à un cycle de pressage final à l'aide d'un poste de pressage final, comprenant un moule inférieur et un poinçon de pressage final;
on effectue au moins un cycle de pressage intermédiaire entre le cycle de pré-pressage et le cycle de pressage final;
on abaisse la température de verre de cycle de pressage en cycle de pressage;
on dispose le moule inférieur (5.1) sur une platine (2);
on achemine par rotation progressive de la platine (2) le moule inférieur (5.1) contenant le verre en fusion dans le même sens de rotation, aux postes de pressage successifs.
